(19) **Europäisches Patentamt / European Patent Office / Office européen des brevets**

(11) **EP 4 723 233 A1**

(12) **EUROPEAN PATENT APPLICATION**
published in accordance with Art. 153(4) EPC

(43) Date of publication:
08.04.2026  Bulletin 2026/15

(21) Application number: 24908174.6

(22) Date of filing: 20.12.2024

(51) International Patent Classification (IPC):
$H01M\ 4/525^{(2010.01)}$  $H01M\ 4/505^{(2010.01)}$
$H01M\ 4/131^{(2010.01)}$  $H01M\ 4/1391^{(2010.01)}$
$H01M\ 10/052^{(2010.01)}$  $H01M\ 50/107^{(2021.01)}$
$H01M\ 50/152^{(2021.01)}$  $H01M\ 4/02^{(2006.01)}$

(52) Cooperative Patent Classification (CPC):
H01M 4/02; H01M 4/131; H01M 4/1391;
H01M 4/505; H01M 4/525; H01M 10/052;
H01M 50/107; H01M 50/152; Y02E 60/10

(86) International application number:
PCT/KR2024/020849

(87) International publication number:
WO 2025/135892 (26.06.2025 Gazette 2025/26)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 22.12.2023  KR 20230190457

(71) Applicant: **LG Energy Solution, Ltd.
Seoul 07335 (KR)**

(72) Inventors:
• **LEE, Chang Woo**
  **Daejeon 34122 (KR)**
• **JEONG, Seong Kwon**
  **Daejeon 34122 (KR)**
• **JANG, Seong Keun**
  **Daejeon 34122 (KR)**
• **LEE, Yun Ju**
  **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **POSITIVE ELECTRODE AND SECONDARY BATTERY INCLUDING SAME**

(57)  The present invention relates to a positive electrode which includes a positive electrode composite layer containing a high-nickel positive electrode active material having nickel in an amount of 80 mol% or greater in an entire metal excluding lithium, wherein A, defined by Equation (1) below, is 1 or less, and a preparation method of the positive electrode.

$$\text{Equation (1): } A = 0.00076\ln(-2.435 \times (a/b) + 268.4) \times w$$

where, in Equation (1) above, a is a length of the positive electrode composite layer measured in mm, b is a width of the positive electrode composite layer measured in mm, and w is a value of moisture content in the positive electrode measured in ppm.

EP 4 723 233 A1

FIG.5

**Description**

## TECHNICAL FIELD

### Cross-reference to Related Applications

This application claims priority from Korean Patent Application No. 10-2023-0190457, filed on December 22, 2023, the disclosure of which is incorporated by reference herein.

The present invention relates to a positive electrode and a secondary battery including the same, and more particularly, to a positive electrode designed such that the dimension of a positive electrode composite layer and the moisture content in the positive electrode satisfy a particular relationship, and a lithium secondary battery including the same.

## BACKGROUND ART

Recently, as demand for a high-capacity battery is increasing due to technological development of an electric vehicle, applying a high-nickel positive electrode active material and/or high loading onto a positive electrode is on the rise.

The positive electrode applied with the high-nickel positive electrode active material is vulnerable to moisture penetration, and when the moisture penetrates into the positive electrode, lithium by-products on a surface of the positive electrode active material and the moisture react to form impurities, thereby causing a problem of positive electrode deterioration. In case that the positive electrode deterioration occurs, not only the battery performance is reduced, but also the rate of defects increases during a process of preparation. In particular, in case of a large-sized battery such as a 4680 cell, which has a high loading amount of positive electrode, this problem becomes more serious.

Therefore, it is required to develop a positive electrode capable of suppressing positive electrode deterioration even in case of being applied with a high-nickel positive electrode active material, or in case of being applied to a large-sized battery such as a 4680 cell.

## DISCLOSURE OF THE INVENTION

## TECHNICAL PROBLEM

The present invention is to solve the above problems by providing a positive electrode in which the dimension of a positive electrode composite layer and the moisture content in the positive electrode satisfy a particular condition to have excellent electrochemical performance, particularly, excellent energy density, and providing a method of preparing the same.

In addition, the present invention is to provide a lithium secondary battery having less energy loss while achieving high capacity by including the positive electrode as described above.

## TECHNICAL SOLUTION

According to an embodiment, the present invention provides a positive electrode which includes a positive electrode composite layer containing a high-nickel positive electrode active material having nickel in an amount of 80 mol% or greater in the entire metal excluding lithium, wherein A, defined by Equation (1) below, is 1 or less, preferably 0.7 or less, and more preferably 0.5 or less.

$$\text{Equation (1): } A = 0.00076\ln(-2.435 \times (a/b) + 268.4) \times w$$

In Equation (1) above, a is a length of the positive electrode composite layer measured in mm, b is a width of the positive electrode composite layer measured in mm, and w is a value of moisture content in the positive electrode measured in ppm.

At this time, the high-nickel positive electrode active material may include a lithium transition metal oxide represented by [Chemical Formula 1] below.

[Chemical Formula 1] $\quad\quad Li_aNi_xCo_yM^1_zM^2_wO_2$

In Chemical Formula 1 above,
$M^1$ is at least one of Mn and Al, $M^2$ includes one or more selected from the group consisting of Ti, Mg, Al, Zr, Y, Ba, Ca, Sr, W, Ta, Nb, and Mo, and $0.9 \leq a \leq 1.1$, $0.8 \leq x < 1$, $0 < y < 0.2$, $0 < z < 0.2$, and $0 \leq w \leq 0.1$.

Meanwhile, a ratio a/b of the length a of the positive electrode composite layer to the width b of the positive electrode composite layer may be 40 to 70, preferably 45 to 65, and more preferably 50 to 65.

In addition, the length a of the positive electrode composite layer may be 3000 mm to 5000 mm, preferably 3500 mm to 4500 mm, and more preferably 3700 mm to 4200 mm, and the width b of the positive electrode composite layer may be 50 mm to 90 mm, preferably 55 mm to 85 mm, and more preferably 65 mm to 65 mm.

Meanwhile, the positive electrode may satisfy Expression (2) below.

$$\text{Expression (2): } w \leq 4(a/b) + 54$$

In Expression (2) above, a is a length of the positive electrode composite layer measured in mm, b is a width of the positive electrode composite layer measured in mm, and w is a value of moisture content in the positive electrode measured in ppm.

According to another embodiment, the present invention provides a preparation method of a positive electrode including preparing a positive electrode containing a positive electrode composite layer having a high-nickel positive electrode active material with nickel in an amount of 80 mol% or greater in the entire metal excluding lithium; and storing the positive electrode in an environment controlled such that A, defined by Equation (1) below, becomes 1 or less, preferably 0.7 or less, and more preferably 0.5 or less.

$$\text{Equation (1): } A = 0.00076\ln(-2.435 \times (a/b) + 268.4) \times w$$

In Equation (1) above, a is a length of the positive electrode composite layer measured in mm, b is a width of the positive electrode composite layer measured in mm, and w is a value of moisture content in the positive electrode measured in ppm.

In particular, in the storing of the positive electrode, the positive electrode may be stored in an environment of 15% or less relative humidity for 17 weeks or less.

According to another embodiment, the present invention provides a lithium secondary battery including an electrode assembly in which the positive electrode of the present invention previously described, a separator, and a negative electrode are sequentially laminated and wound in one direction; an electrolyte; and a battery case in which the electrode assembly and an electrolyte are accommodated.

At this time, the battery case may include a battery can in which the electrode assembly and the electrolyte are accommodated; and a sealing body that seals an open end portion of the battery can.

Preferably, the lithium secondary battery may be a cylindrical battery, and a ratio of a battery diameter to a battery height of the cylindrical battery may be 0.4 or greater. In particular, the battery diameter may be 40 mm or greater, preferably 40 mm to 60 mm, and more preferably 45 mm to 60 mm, and the battery height may be 70 mm or greater, preferably 70 mm to 120 mm, and more preferably 75 m to 120 mm.

In addition, the lithium secondary battery may have a structure in which the positive electrode and the negative electrode of the electrode assembly include a non-coated part, and the non-coated part defines an electrode tab.

## ADVANTAGEOUS EFFECTS

In the present invention, by controlling the storage environment of the positive electrode to adjust the moisture content according to the dimension of the positive electrode composite layer, side reactions caused by moisture may be minimized. When the dimension of the positive electrode composite layer and the moisture content fall within the numerical ranges of the present invention, deterioration in electrochemical performance of the high-nickel and high-loading positive electrode, which is vulnerable to moisture, is suppressed.

Therefore, in case of applying the positive electrode according to the present invention, defects occurring due to deterioration of the positive electrode may be suppressed, so that the yield may be significantly improved, and also, deterioration of electrochemical property and energy loss may be minimized in the battery.

## BRIEF DESCRIPTION OF THE DRAWINGS

FIG. 1 is a drawing illustrating a laminated state of an electrode assembly, according to the present invention, before winding.

FIG. 2 is a cross-sectional view illustrating a structure of an electrode plate of an electrode assembly according to an embodiment of the present invention.

FIG. 3 is a drawing illustrating a structure of an electrode assembly according to an embodiment of the present invention.

FIG. 4 is a cross-sectional view illustrating a structure of a lithium secondary battery according to an embodiment of the present invention.

FIG. 5 is a cross-sectional view illustrating a structure of a lithium secondary battery according to another embodiment of the present invention.

FIG. 6 is a drawing illustrating a battery pack according to the present invention.

FIG. 7 is a graph showing comparison between the resistance characteristics by SOC values of cells according to Example 8 and Comparative Examples 3 and 4.

## MODE FOR CARRYING OUT THE INVENTION

Hereinafter, the present invention will be described in more detail.

In the present invention, the "moisture content (unit: ppm)" refers to the weight of moisture contained per $10^6$g of a positive electrode composite layer, which may be measured in the following method.

<Method of Measuring Moisture Content>

A positive electrode (semi-processed electrode) with completed rolling process was cut out into a sheet in a size of 30 mm x 40 mm, and four sheets were overlapped to prepare a sample, and the sample was put into a vial of 20 mL, and using a Metrohm 851 of Titando which is an electrode moisture measurement instrument, the amount of moisture contained in the sample was measured. At this time, the measurement was performed in a dry room of 23+/-3 °C temperature, 1% or less humidity, and -35 °C or less dew point temperature, and the amount of the measured moisture was divided by the total weight of the positive electrode composite layer of the sample, and the value was evaluated as the moisture content.

In the present invention, the "absolute moisture amount (unit: mg)" refers to the weight of moisture contained in the entire positive electrode, which may be calculated by multiplying the measured moisture content by the weight of the positive electrode.

As a result of repetitive researches conducted in order to suppress performance deterioration of a positive electrode applied with a high-nickel positive electrode active material for achieving high capacity, the present inventors discovered that, in case of controlling the storage environment for the positive electrode such that the dimension of a positive electrode composite layer and the moisture content of the positive electrode are adjusted to satisfy a particular condition, deterioration of the positive electrode, caused by side reactions with the moisture, may be effectively suppressed, and therefore, the present inventors have completed the present invention.

## Positive Electrode

First, a positive electrode according to the present invention is described.

The positive electrode according to the present invention may include a positive electrode composite layer containing a high-nickel positive electrode active material having nickel in an amount of 80 mol% or greater in the entire metal excluding lithium, and A, defined by Equation (1) below, may be 1 or less, preferably 0.7 or less, and more preferably 0.5 or less.

$$\text{Equation (1): } A = 0.00076\ln(-2.435\times(a/b)+268.4)\times w$$

In Equation (1) above, a is a length of the positive electrode composite layer measured in mm, b is a width of the positive electrode composite layer measured in mm, and w is a value of moisture content in the positive electrode measured in ppm.

When the dimension of the positive electrode composite layer and the moisture content of the positive electrode fall within the range of Equation (1) above, deterioration of electrochemical performance caused by side reactions with the moisture, particularly, energy loss, may be minimized.

In case of the positive electrode applied with the high-nickel positive electrode active material which is vulnerable to moisture, there was a problem that the increased moisture content in the positive electrode, due to exposure to moisture, leads to a decrease of discharge voltage, causing reduction in energy density when applied to a cell. By keeping the moisture content of the positive electrode very low through the vacuum storage, etc., this problem may be solved, but in this case, the cost of preparing a battery rises sharply, causing a problem of low competitiveness. Accordingly, as a result of the research on a method of preventing deterioration of a high-nickel positive electrode while not increasing the preparation cost significantly, the present inventors discovered that the degree of deterioration by the moisture content of the positive electrode varies according to the dimension of the positive electrode composite layer, and accordingly, by adjusting the dimension of the positive electrode composite layer and the moisture content such that A of Equation (1) becomes 1 or less, the increase of preparation cost may be minimized and the deterioration of the positive electrode caused by the moisture may be suppressed. In particular, when the positive electrode in which A of Equation (1) is or less is applied, loss of energy density, caused by the decrease in discharge voltage of positive electrode, may be minimized.

In addition, it is more preferred that the positive electrode satisfies Expression (2) below.

$$\text{Expression (2): } w \leq 4(a/b) + 54$$

In Expression (2) above, a is a length of the positive electrode composite layer measured in mm, b is a width of the positive electrode composite layer measured in mm, and w is a value of moisture content in the positive electrode measured in ppm.

When the moisture content of the positive electrode and the dimension of the positive electrode composite layer satisfy the relation in Expression (2), more excellent effect of suppressing the reduction in electrochemical performance, caused by side reactions with the moisture, is exhibited.

Meanwhile, the moisture content (w) of the positive electrode may be adjusted by controlling the storage environment of the positive electrode. The high-nickel positive electrode has an increased moisture content by absorbing moisture present in the atmosphere during the storage process. Accordingly, through the method of storing the positive electrode in low-humidity environment, the moisture content in the positive electrode may be adjusted. In addition, even in the low-humidity environment, the moisture content may increase in case of long-term storage. Therefore, it is preferred that the storing period is also adjusted together with the humidity. Meanwhile, since the deterioration of the positive electrode caused by the moisture is also related to the dimension of the positive electrode composite layer as previously described, during the storage, the humidity and the storing period may be appropriately adjusted according to the dimension of the positive electrode composite layer.

Meanwhile, the positive electrode composite layer includes a high-nickel positive electrode active material containing nickel in the amount of 80 mol% or greater in the entire metal excluding lithium. When the positive electrode active material containing nickel in the amount of 80 mol% or greater is used, high-capacity characteristics may be achieved.

For example, the high-nickel positive electrode active material may include a lithium transition metal oxide represented by [Chemical Formula 1] below.

[Chemical Formula 1]     $Li_aNi_xCo_yM1_zM2_wO_2$

In Chemical Formula 1 above, $M^1$ may be at least one of Mn and Al, and particularly, may be Mn, Al, or a combination of Mn and Al.

$M^2$ is a doping element including one or more selected from the group consisting of Ti, Mg, Al, Zr, Y, Ba, Ca, Sr, W, Ta, Nb, and Mo. As the amount of Ni increases, structural stability and thermal stability of the positive electrode active material may decrease, but in case of further including the doping element, improvement effect on structural stability and/or thermal stability of the positive electrode active material may be achieved.

a above represents the mole fraction of lithium in the lithium transition metal oxide, where $0.9 \leq a \leq 1.1$, $0.95 \leq a \leq 1.1$, or $1.0 \leq a \leq 1.1$ may be satisfied.

x above represents the mole fraction of nickel in the entire metal excluding lithium, where $0.8 \leq x < 1$, $0.83 \leq x < 1$, $0.86 \leq x < 1$, or $0.88 \leq x \leq 0.95$ may be satisfied. When the amount of nickel in the lithium transition metal oxide falls within the above ranges, it is possible to achieve the high capacity.

y above represents the mole fraction of cobalt in the entire metal excluding lithium, where $0 < y < 0.2$, $0 < y < 0.17$, $0 < y < 0.14$, or $0.01 \leq y < 0.12$ may be satisfied.

z above represents the mole fraction of an $M^1$ element in the entire metal excluding lithium, where $0 < z < 0.2$, $0 < z < 0.17$, $0 < z < 0.14$, or $0.01 \leq z < 0.12$ may be satisfied.

w above refers to the mole fraction of a $M^2$ element in the entire metal excluding lithium, where $0 \leq w \leq 0.1$, $0 \leq w \leq 0.05$, or $0 \leq w \leq 0.03$ may be satisfied.

Meanwhile, the positive electrode active material may further include, as needed, a coating layer containing one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si, and S on a particle surface of the lithium transition metal oxide. Preferably, the coating element may be Al, B, Co, or a combination thereof. In the case where the coating layer is present on the particle surface of the lithium transition metal oxide, contacts of an electrolyte and the lithium composite transition metal oxide may be suppressed by the coating layer, and accordingly, effect of reducing the elution of transition metal and gas generation, caused by side reactions with the electrolyte, may be achieved.

Meanwhile, the positive electrode active material may have a form not particularly limited, and may have a secondary particle form in which a plurality of primary particles is aggregated, or a single particle form including one primary particle, or a mixture thereof.

The positive electrode active material may be included in the amount of 80 to 99 wt%, preferably of 85 to 99 wt%, and more preferably of 90 to 99 wt% on the basis of the total weight of the positive electrode composite layer.

Meanwhile, the positive electrode composite layer may further include a positive electrode conductive material and a positive electrode binder in addition to the positive electrode active material.

The positive electrode conductive material is used to provide conductivity to the positive electrode, and any material that does not cause chemical change and conducts electrons may be used in the battery without particular limitation. Specific examples of the positive electrode conductive material may be graphite such as natural graphite or artificial graphite; a carbon-based material including carbon black, acetylene black, ketjen black, channel black, furnace black, lamp black, thermal black, a carbon fiber, a carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The positive electrode conductive material may be included generally in the amount of 1 to 30 wt%, preferably 1 to 20 wt%, and more preferably 1 to 10 wt% on the basis of the total weight of the positive electrode composite layer.

Next, the positive electrode binder serves to improve binding between positive electrode active material particles and adhesion between the positive electrode active material and a positive electrode current collector, and specific examples may include polyvinylidene fluoride (PVDF), vinylidene fluoride-hexafluoropropylene copolymer (PVDF-co-HFP), polyvinyl alcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), fluorine rubber, or various copolymers thereof, and any one alone or a mixture of two or more thereof may be used. The positive electrode binder may be included in the amount of 1 to 30 wt%, preferably 1 to 20 wt%, and more preferably 1 to 10 wt% on the basis of the total weight of the positive electrode composite layer.

Meanwhile, a ratio a/b of the length a of the positive electrode composite layer to the width b of the positive electrode composite layer may be 40 to 70, preferably 45 to 65, and more preferably 50 to 65. When a/b falls within the above ranges, deterioration and deformation of the positive electrode is effectively prevented, so that improvement effects of productivity and quality may be achieved, and the storage period of the electrode increases, which is economically advantageous. When a/b is less than the above range, an additional air-conditioning facility may be required to control the amount of moisture in the positive electrode, causing a problem of increased preparation cost, and when a/b is greater than the above range, the increased amount of moisture in the positive electrode may cause problems of reduced energy density and side reactions occurring due to the moisture.

In particular, the length a of the positive electrode composite layer may be 3000 mm to 5000 mm, preferably 3500 mm to 4500 mm, and more preferably 3700 mm to 4200 mm, and the width b may be 50 mm to 90 mm, preferably 55 mm to 85 mm, and more preferably 65 mm to 65 mm. When the length and width of the positive electrode composite layer fall within the above ranges, respectively, it is suitable for implementing a large-sized cylindrical battery such as a 4680 cell or a 4695 cell. When the length and width of the positive electrode composite layer are out of the above ranges, the problems such as reduction in energy density and negative electrode overhang may be caused, and when stored in a conventional air-conditioning environment, the absolute moisture amount may increase, causing deterioration of the positive electrode.

**Preparation Method of Positive Electrode**

Hereinafter, a preparation method of a positive electrode according to the present invention is described.

The preparation method of a positive electrode, according to the present invention, includes (1) preparing a positive electrode containing a positive electrode composite layer having a high-nickel positive electrode active material with nickel in an amount of 80 mol% or greater in the entire metal excluding lithium; and (2) storing the positive electrode in an environment controlled such that A, defined by Equation (1) below, becomes 1 or less, preferably 0.7 or less, and more preferably 0.5 or less.

$$\text{Equation (1): } A = 0.00076\ln(-2.435\times(a/b)+268.4)\times w$$

In Equation (1) above, a is a length of the positive electrode composite layer measured in mm, b is a width of the positive electrode composite layer measured in mm, and w is a value of moisture content in the positive electrode measured in ppm.

The preparing of the positive electrode may be performed in a method of preparing a positive electrode well-known in the relevant art, for example in a method of applying a positive electrode slurry, containing the high-nickel positive electrode active material having nickel in the amount of 80 mol% or greater, a positive electrode conductive material, and a positive electrode dispersant, onto a positive electrode current collector to form a positive electrode composite layer.

In particular, the positive electrode may be prepared in a method in which the positive electrode slurry is applied onto one side or both sides of the positive electrode current collector in a long sheet shape, and a solvent of the positive electrode slurry is removed through a drying process, and then rolling and drying are performed. Meanwhile, the positive electrode including a non-coated part may be prepared in a method in which the positive electrode slurry is not applied onto a partial region of the positive electrode current collector, for example, one end portion of the positive electrode current collector, during the application of the positive electrode slurry.

As the positive electrode current collector, various positive electrode current collectors that are used in the relevant art may be used. For example, for the positive electrode current collector, stainless steel, aluminum, nickel, titanium, calcined carbon, or aluminum or stainless steel that is surface-treated with carbon, nickel, titanium, silver, etc. may be used. The positive electrode current collector may generally have a thickness of 3 to 500 $\mu$m, and microscopic irregularities may be formed on a surface of the positive electrode current collector to improve adhesion of the positive electrode active material. The positive electrode current collector may be used in various forms, for example, film, a sheet, a foil, a net, a porous body, a foam body, a non-woven fabric body, etc.

In addition, the positive electrode slurry may be prepared by dispersing a positive electrode active material in a solvent such as dimethyl sulfoxide (DMSO), isopropyl alcohol, N-methylpyrrolidone (NMP), acetone, or water.

Thereafter, the positive electrode, prepared as above, is stored in an environment controlled such that Equation (1) below is satisfied. For example, the storing may be performed by adjusting the relative humidity and/or the storage period.

As previously described, since the high-nickel positive electrode has an increased moisture content by absorbing moisture present in the atmosphere during the process of storing, the moisture content in the positive electrode may be adjusted by controlling the storage environment of the positive electrode. Particularly, the moisture content in the positive electrode may be adjusted by adjusting the relative humidity and the storage period during the storing of the positive electrode, and more particularly, the relative humidity in an air-conditioning facility where the positive electrode is stored, and the storage period in the air-conditioning facility may be adjusted. At this time, the relative humidity in the air-conditioning facility is a value defined by Equation (3) below.

Equation (3): Relative humidity in air-conditioning facility (RH%) = (actual vapor density/saturated vapor density) x 100    Equation (3) :

In Equation (3) above, the actual vapor density is 611e (17.3×dew point temperature in air-conditioning facility) / (273+dew point temperature), the saturated vapor density is 611e(17.3×temperature in air-conditioning facility) / (273+temperature in air-conditioning facility), and the temperature unit is °C.

The relative humidity and the storage period may vary according to the dimension of the positive electrode composite layer, but preferably, the relative humidity may be 15% or less, and the storage period may be 17 weeks or less. This is because, when the relative humidity is greater than 15% or the storage period is longer than 17 weeks, the moisture content in the positive electrode increases, and the condition of Equation (1) is difficult to be satisfied.

## Lithium Secondary Battery

Next, a lithium secondary battery according to the present invention is described.

The lithium secondary battery according to the present invention includes an electrode assembly, an electrolyte, and a battery case accommodating the electrode assembly and the electrolyte. At this time, the electrode assembly is formed by the positive electrode of the present invention previously described, a separator, and a negative electrode, being sequentially laminated and wound in one direction.

Hereinafter, each component of the lithium secondary battery according to the present invention is described in more detail.

## Electrode Assembly

The electrode assembly according to the present invention includes a positive electrode, a negative electrode, and a separator disposed between the positive electrode and the negative electrode. Since the positive electrode is previously described, components other than the positive electrode will be described in the following.

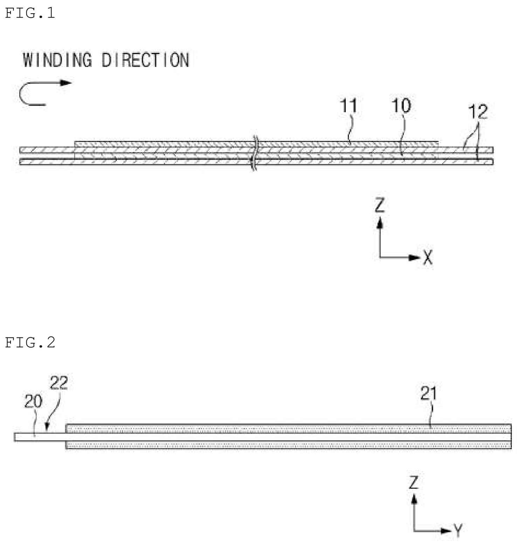

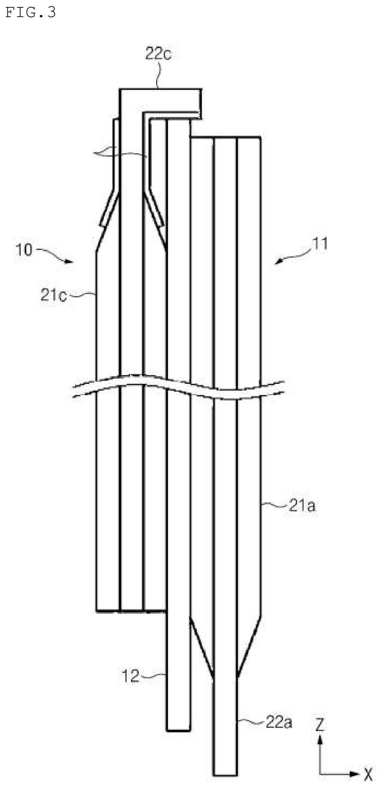

FIG. 1 illustrates a laminated structure of the electrode assembly, according to an embodiment of the present invention, before winding, FIG. 2 illustrates a cross-sectional structure of an electrode plate (positive electrode or negative electrode) according to an embodiment of the present invention, and FIG. 3 illustrates a structure of an electrode assembly according to an embodiment of the present invention.

Referring to FIG. 1 and FIG. 2, the electrode assembly A of the present invention may be prepared by laminating the separator 12, the positive electrode 10, the separator 12, and the negative electrode 11 in sequence at least once to form a laminate, and winding the laminate in one direction X.

At this time, the positive electrode 10 and the negative electrode 11 may each have a structure in which an active material layer 21 is formed on a current collector 20 in a long sheet shape, and may include a non-coated part 22, where the active material layer 21 is not formed, in a partial region of the current collector 20.

By using the positive electrode 10 and the negative electrode 11 including the non-coated part 22 as above, it may be possible to provide a battery having a structure in which a separate electrode tab is not included, and at least a part of the non-coated part of each of the positive electrode 10 and the negative electrode 11 defines an electrode tab.

In particular, the non-coated part 22 may be formed lone along a winding direction X at an end portion of one side of the current collector 20, a current collector plate may be bonded to each of the positive electrode non-coated part and the negative electrode non-coated part, and the current collector plate may be connected to an electrode terminal, and accordingly, the non-coated part may function as the electrode tab.

For example, through the following method, it may be possible to prepare a battery in which the positive electrode non-coated part and the negative electrode non-coated part function as electrode tabs. First, the separator, the positive electrode, the separator, and the negative electrode are sequentially laminated such that the non-coated part of the positive electrode and the non-coated part of the negative electrode are positioned in opposite directions from each other, and then the laminate is wound in one direction to prepare an electrode assembly in a jelly-roll type. Thereafter, the non-coated parts of the positive electrode and the negative electrode are bent in a direction of winding center C, then the current collector plate is bonded by welding to each of the non-coated part of the positive electrode and the non-coated part of the negative electrode, and the current collector plate is connected to the electrode terminal to prepare a battery. The current collector plate may have a larger unit area than that of the electrode tab in a strip type, and the resistance may be inversely proportional to the unit area of a path through which a current flows, and therefore, in case of forming the secondary battery in the above structure, cell resistance may be significantly lowered.

Meanwhile, the positive electrode and negative electrode non-coated parts may be processed into a form of a plurality of segmented pieces capable of bending independently, and at least a part of the plurality of segmented pieces may be bent toward the winding center C of the electrode assembly.

The segmented piece may be formed by processing the positive electrode and negative electrode current collectors through a metal foil cutting process such as laser notching, ultrasonic cutting, punching, etc.

When the non-coated parts of the positive electrode and negative electrode are processed into the form of the plurality of segmented pieces, stress, applied to the non-coated part during bending, may be reduced to prevent deformation or damage on the non-coated part, and welding characteristics to the current collector plate may be improved.

The current collector plate and the non-coated part may be bonded generally by welding, and in order to improve the welding characteristics, strong pressure needs to be applied to the welding area of the non-coated part, so that the non-coated part needs to be bent as flat as possible. However, in this bending process, the shape of the non-coated part may be distorted and deformed irregularly, and the deformed portion may be in contact with an electrode with the opposite polarity to cause internal short circuit or fine cracks on the non-coated part. However, if the non-coated parts of the positive electrode and negative electrode are processed into the form of the plurality of segmented pieces capable of bending independently, the stress applied to the non-coated part during the bending may be relieved, thereby minimizing the deformation and damage on the non-coated part.

In addition, in case that the non-coated part is processed into the form of the segmented pieces as above, overlapping between the plurality of segmented pieces may occur during the bending, and accordingly, welding strength to the current collector plate may increase, and when using recent technology such as laser welding, it may be possible to prevent the problem that lase penetrates into the electrode assembly and melts over the separator or active materials. Preferably, at least a part of the plurality of segmented pieces that are bent may overlap on upper side and lower side of the electrode assembly, and the current collector plate may be bonded onto the overlapped plurality of segmented pieces.

Meanwhile, the electrode assembly according to the present invention may be formed in a structure in which an insulation layer 24 is additionally formed on the positive electrode 10 as illustrated in FIG. 3. In particular, the insulation layer 24 may be formed along a direction parallel to a winding direction of the electrode assembly to cover a part of a positive electrode active material layer and a part of the non-coated part.

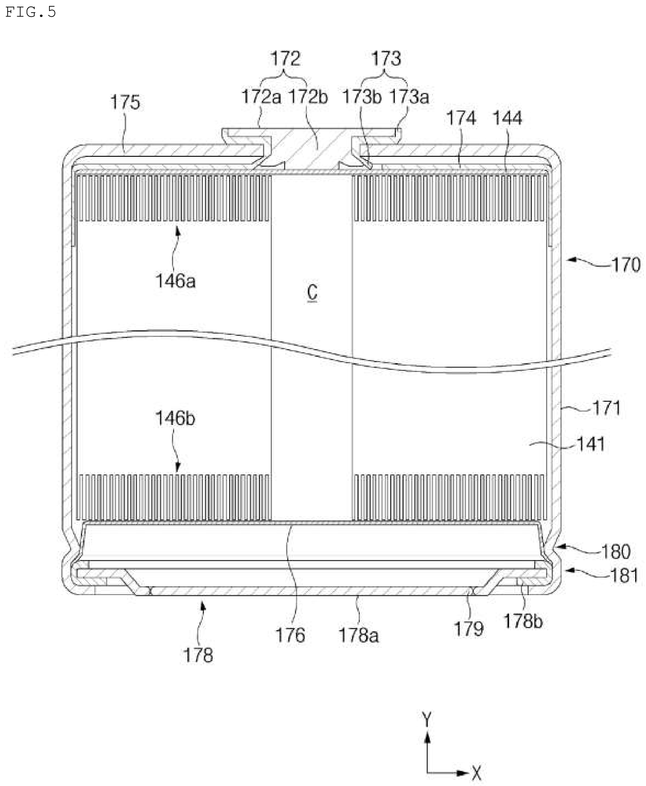

In case of the battery in a tab-less structure using the non-coated part 22c of the positive electrode 10 and the non-coated part 22a of the negative electrode 11 as electrode tabs, the electrode assembly is formed such that the positive electrode 10 protrudes from the upper part of the separator 12, and the negative electrode 11 protrudes from the lower part of the separator 12, and the protruding positive electrode 10 and/or negative electrode 11 are bent and then bonded to the current collector plate. Meanwhile, in case of bending the positive electrode 10 or the negative electrode 11 as above, the current collector of the positive electrode 10 or the negative electrode 11 may be positioned beyond the separator and close to the electrode of the opposite polarity, and accordingly, there is a possibility that the positive electrode and the negative electrode may be electrically in contact with each other, thereby causing an internal short circuit. However, as illustrated in FIG. 5, when the insulation layer 24 covering a part of the positive electrode active material layer and a part of the non-coated part is formed, electrical contact between the positive electrode 10 and the negative electrode 11 may be prevented by the insulation layer 24, thereby preventing the short circuit occurring inside the battery.

Preferably, the insulation layer 24 may be included on at least one side of the current collector of the positive electrode 10, and may be preferably included on both sides of the positive electrode 10.

In addition, the insulation layer 24 may be formed in a region of the positive electrode 10, which may possibly face an active material layer 21a of the negative electrode 11. For example, the insulation layer 24 may be formed by extending to the end of the non-coated part 22c on the surface of the non-coated part 22c of the positive electrode 10 which faces the negative electrode 11 after being bent. However, in case of the opposite surface of the surface facing the negative electrode 11 after being bent, it is preferred that the insulation layer 24 is formed only to a part of the non-coated part 22c, for example, to the bent point of the non-coated part 22c. This is because, in case that the insulation layer 24 is formed on the entire region of the non-coated part of the opposite surface of the surface facing the negative electrode 11, electrical contact with the current collector plate is impossible, so that the non-coated part may not function as an electrode tab.

Meanwhile, for the insulation layer 24, the material or component is not particularly limited as long as it secures insulating performance and is attachable to the positive electrode. For example, the insulation layer may be an insulation coating layer or an insulating tape, and the insulation coating layer may include an organic binder and an inorganic particle. At this time, the organic binder may be, for example, a styrene-butadiene rubber (SBR), and the inorganic particle may be an aluminum oxide, but an example is not limited thereto.

Meanwhile, the negative electrode may have a structure in which a negative electrode composite layer is formed on one side or both sides of a negative electrode current collector in a sheet shape, and the negative electrode composite layer may include a negative electrode active material, a negative electrode conductive material, and a negative electrode binder.

In particular, the negative electrode active material, the negative electrode conductive material, and the negative electrode binder may be dispersed in a solvent such as dimethyl sulfoxide (DMSO), isopropyl alcohol, N-methylpyrrolidone (NMP), acetone, water, etc., to prepare a negative electrode slurry, the prepared negative electrode slurry is applied onto one side or both sides of the negative electrode current collector in a sheet shape, and the solvent of the negative electrode slurry is removed through a drying process, and then rolling is performed to prepare the negative electrode. Meanwhile, the negative electrode including a non-coated part may be prepared in a method in which the negative electrode slurry is not applied onto a partial region of the negative electrode current collector, for example, one end portion of the negative electrode current collector, during the application of the negative electrode slurry.

A compound capable of reversible intercalation and deintercalation of lithium may be used as the negative electrode active material. Particular examples of the negative electrode active material may be a carbon material including artificial graphite, natural graphite, a graphitized carbon fiber, amorphous carbon, etc.; a silicon-based material including Si, a Si-Me alloy (where, Me is one or more selected from the group consisting of Al, Sn, Mg, Cu, Fe, Pb, Zn, Mn, Cr, Ti, and Ni), $SiO_y$ (where, $0<y<2$), a Si-C composite, etc.; a lithium metal thin film; a metal material capable of alloying with lithium such as Sn, Al, etc., and any one thereof or a mixture of two or more thereof may be used.

Preferably, the negative electrode according to the present invention may include a silicon-based negative electrode active material. The silicon-based negative electrode active material may be Si, a Si-Me alloy (where, Me is one or more selected from the group consisting of Al, Sn, Mg, Cu, Fe, Pb, Zn, Mn, Cr, Ti, and Ni.), $SiO_y$ (where, $0<y<2$), a Si-C composite, or a combination thereof, and preferably, may be $SiO_y$ (where, $0<y<2$). Since the silicon-based negative electrode active material has high theoretical capacity, if the silicon-based negative electrode active material is included, capacity characteristics may be improved.

Meanwhile, the silicon-based negative electrode active material may be doped with a $M^b$ metal, and at this time, the $M^b$ metal may be a Group 1 metal element, a Group 2 metal element, and particularly, Li, Mg, etc. In particular, the silicon negative electrode active material may be Si, $SiO_y$ (where, $0<y<2$), a Si-C composite, etc. which are doped with the $M^b$ metal. The metal-doped silicon-based negative electrode active material may have somewhat reduced active material capacity, due to the doping element, but have high efficiency, and may thus provide high energy density.

In addition, the silicon-based negative electrode active material may further include a carbon-coating layer on a particle surface. At this time, the carbon coating amount may be 20 wt% or less, and preferably 1 to 20 wt% on the basis of the total weight of the silicon-based negative electrode active material.

In addition, the negative electrode may further include a carbon-based negative electrode active material, as needed, as the negative electrode active material. The carbon-based negative electrode active material may be, for example, artificial graphite, natural graphite, a graphitized carbon fiber, amorphous carbon, soft carbon, hard carbon, etc., but is not limited thereto.

Meanwhile, when a mixture of the silicon-based negative electrode active material and the carbon-based negative electrode active material is used as the negative electrode active material, a mixed ratio of the silicon-based negative electrode active material and the carbon-based negative electrode active material may be a weight ratio of 1:99 to 20:80, preferably 1:99 to 15:85, and more preferably 1:99 to 10:90.

The negative electrode active material may be included in the amount of 80 to 99 wt%, preferably of 85 to 99 wt%, and more preferably of 90 to 99 wt% on the basis of the total weight of the negative electrode composite layer.

Meanwhile, as the negative electrode current collector, negative electrode current collectors, generally used in the relevant art, may be used, and for example, copper, stainless steel, aluminum, nickel, titanium, calcined carbon, copper or stainless steel that is surface-treated with carbon, nickel, titanium, silver, etc., an aluminum-cadmium alloy, etc. may be used. The negative electrode current collector may generally have a thickness of 3 to 500 $\mu$m, and like the positive electrode current collector, microscopic irregularities may be formed on a surface of the current collector to strengthen binding force of the negative electrode active material. For example, the current collector may be used in various forms including a film, a sheet, a foil, a net, a porous body, a foam body, a non-woven fabric body, etc.

The negative electrode conductive material is used to provide conductivity to the negative electrode, and any material that does not cause chemical change and conducts electrons may be used in the battery without particular limitation. Specific examples may be graphite such as natural graphite or artificial graphite; a carbon-based material including carbon black, acetylene black, ketjen black, channel black, furnace black, lamp black, thermal black, a carbon fiber, a carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included generally in the amount of 1 to 30 wt%, preferably 1 to 20 wt%, and more preferably 1 to 10 wt% on the basis of the total weight of the negative electrode composite layer.

The negative electrode binder serves to improve binding between negative electrode active material particles and adhesion between the negative electrode active material and the negative electrode current collector. Specific examples may include polyvinylidene fluoride (PVDF), vinylidene fluoride-hexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), fluorine rubber, or various copolymers thereof, and any one alone or a mixture of two or more thereof may be used. The binder may be included in the amount of 1 to 30 wt%, preferably 1 to 20 wt%, and more preferably 1 to 10 wt% on the basis of the total weight of the negative electrode composite layer.

Next, the separator separates the negative electrode and the positive electrode, and provides a movement path of lithium ions, and any separator may be used, without particular limitation, as long as it is used in a general lithium secondary battery as a separator. In particular, as the separator, a porous polymer film, for example, a porous polymer film prepared with a polyolefin-based polymer such as an ethylene homopolymer, a propylene homopolymer, an ethylene/-butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, polyethylene terephthalate fiber, etc. may also be used. Furthermore, a coated separator including a ceramic component or a polymer material may be used in order to secure heat resistance or mechanical strength.

**Electrolyte**

The electrolyte according to the present invention includes a lithium salt and an organic solvent.

Any compound capable of providing lithium ions that are used in a lithium secondary battery may be used for the lithium salt without particular limitation. In particular, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, LiN $(C_2F_5SO_3)_2$, LiN $(C_2F_5SO_2)_2$, $LiN(CF_3SO_2)_2$, LiCl, LiI, $LiB(C_2O_4)_2$, or the like may be used. The lithium salt may be used in a concentration range of 0.1 to 5.0 M, and preferably of 0.1 to 3,0 M. When the concentration of lithium salt falls within the above ranges, the electrolyte may have appropriate conductivity and viscosity, and therefore, excellent performance of the electrolyte may be exhibited, and lithium ions may move effectively.

The organic solvent may include at least one of a cyclic carbonate-based organic solvent, a linear carbonate-based organic solvent, a linear ester-based organic solvent, and a cyclic ester-based organic solvent.

The cyclic carbonate-based organic solvent is an organic solvent with high viscosity, and may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate as the representative examples.

In addition, the linear carbonate-based organic solvent is an organic solvent having low viscosity and low permittivity, and the representative examples may include at least one organic solvent selected from the group consisting of dimethyl carbonate (DMC), diethyl carbonate (DEC), dipropyl carbonate, ethylmethyl carbonate (EMC), methyl propyl carbonate, and ethylpropyl carbonate, and particularly, may include ethylmethyl carbonate (EMC).

The linear ester-based organic solvent may include at least one organic solvent selected from the group consisting of methyl acetate, ethyl acetate, propyl acetate, methyl propionate, ethyl propionate, propyl propionate, and butyl propionate as the particular example.

The cyclic ester-based organic solvent may include at least one organic solvent selected from the group consisting of γ-butyrolactone, γ-valerolactone, γ-caprolactone, σ-valerolactone, and ε-caprolactone.

Preferably, the electrolyte according to the present invention may include ethylene carbonate and dimethyl carbonate as an organic solvent.

Meanwhile, in addition to the above electrolyte components, other additives may be further included in the electrolyte for the purpose of improving lifetime characteristics of a battery, suppressing reduction in battery capacity, improving a discharge capacity of the battery, etc.

The representative examples of the other additives may include at least one other additive selected from the group consisting of a cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the electrolyte.

In particular, the other additives may include one, or two or more compounds selected from the group consisting of vinylene carbonate (VC), vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenyl borate, lithium oxalyl difluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-flurobenzonitrile, 4-flurobenzonitrile, difluorobenzonitrile, trifluorobenzonitrile, phenylacetonitrile, 2-flurophenylacetonitrile, 4-fluorophenylacetonitrile, fluorobenzene, triethanol amine, ethylene diamine, tetravinylsilane, lithium bis (fluorosulfonyl) imide (LiN(SO$_2$F)$_2$, LiFSI), lithium bis(trifluoromethane sulfonyl) imide (LiN(SO$_2$CF$_3$)$_2$, LiTFSI), LiPO$_2$F$_2$, LiODFB, lithium bis oxalato borate (LiB(C$_2$O$_4$)$_2$, LiBOB), and LiBF$_4$.

The other additives may be included in an amount of 0.01 to 20 wt%, and preferably 0.05 to 5.0 wt% on the basis of the total weight of the electrolyte. When the amount of the other additive is less than 0.01 wt%, the effect of improvement in low-temperature output and improvement in high-temperature storage characteristics and high-temperature lifetime characteristics of the battery may be insignificant, and when the amount of the other additive is greater than 20 wt%, side reactions in the electrolyte may occur excessively during charging and discharging of the battery. In particular, when the additives for forming the SEI film are included in an excessive amount, the additives may not be sufficiently decomposed at high temperature, and thus be present as an unreacted product or as precipitates in the electrolyte at room temperature. Accordingly, side reactions that deteriorate lifetime or resistance characteristics of the secondary battery may occur.

**Battery Case**

The battery case may accommodate the electrode assembly and the electrolyte, and various battery cases known in the relevant art, for example, a cylindrical battery case, a prismatic battery case, a pouch-type battery case, etc., may be used.

Preferably, the battery case may be a can-type battery case including a battery can in which the electrode assembly and the electrolyte are accommodated; and a sealing body that seals an open end portion of the battery can.

More preferably, the lithium secondary battery according to the present invention may be a cylindrical battery including the cylindrical battery case, and preferably a large-sized cylindrical battery having a form factor ratio (defined as a value obtained by dividing the diameter by the height of the cylindrical battery, that is, a ratio of the diameter (T) to the height (H)) of 0.4 or greater, and preferably 0.4 to 0.6. Here, the form factor refers to a value representing the diameter and the height of the cylindrical battery. At this time, the battery diameter may be 40 mm or greater, preferably 40 mm to 60 mm, and more preferably 45 mm to 60 mm, and the battery height may be 70 mm or greater, preferably 70 mm to 120 mm, and more preferably 75 m to 120 mm.

The cylindrical battery according to the present invention may be, for example, a 46110 cell (diameter 46 mm, height 110 mm, and form factor ratio 0.418), a 48110 cell (diameter 48 mm, height 110 mm, and form factor ratio 0.436), a 4880 cell (diameter 48 mm, height 80 mm, and form factor ratio 0.600), or a 4680 cell (diameter 46 mm, height 80 mm, and form factor ratio 0.575). In the numerical value representing the form factor, the first 2 numbers refer to a diameter of the cell, and the next 2 or 3 numbers refer to a height of the cell.

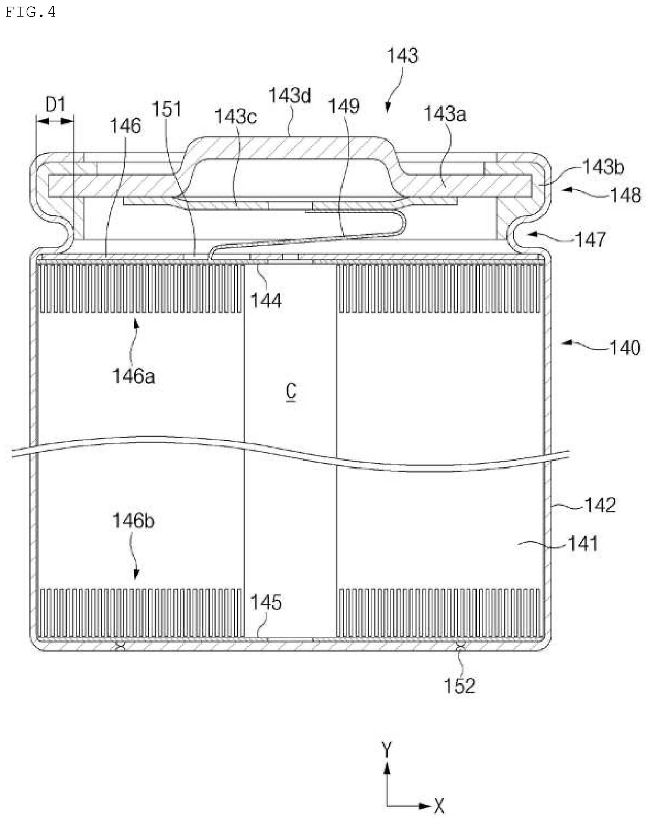

FIGS. 4 and 5 illustrate embodiments of the lithium secondary battery according to the present invention. Hereinafter, referring to FIGS. 4 and 5, the lithium secondary battery according to the present invention is described. However, FIGS. 4 and 5 only illustrate an embodiment of the present invention, and the battery structure of the present invention is not limited to the range illustrated in FIGS. 4 and 5.

FIG. 4 illustrates a cross-sectional view of a lithium secondary battery according to an embodiment of the present invention.

Referring to FIG. 4, the lithium secondary battery 140 according to the present invention includes an electrode assembly 141, a battery case 142 in which the electrode assembly 141 and an electrolyte (not show) are accommodated, and a sealing body 143 that seals an open end portion of the battery case 142.

At this time, the electrode assembly may be formed by winding a laminate of a positive electrode, a separator, and a negative electrode in one direction. In addition, the positive electrode and the negative electrode of the electrode assembly may each include a non-coated part in which an active material layer is not formed, the electrode assembly may be laminated and wound such that the positive electrode non-coated part and the negative electrode non-coated part are respectively positioned on an upper-side portion and a lower-side portion of the electrode assembly. Since the electrode assembly was previously described, components other than the electrode assembly will be described in the following.

Meanwhile, the battery case 142 is a can-type container with an open end portion formed on the upper side, and is made of a metal material with conductivity, such as aluminum or steel. The battery case accommodates the electrode assembly 141 in an inner space through the open end portion on the upper side, and also accommodates the electrolyte (not shown).

Meanwhile, it is preferred that the lithium secondary battery 140 of the present invention does not include a current interruption device (CID).

Meanwhile, as illustrated in FIG. 4, the battery case 142 may be electrically connected to the non-coated part 146b of the negative electrode, and may be in contact with an external power to serve as a negative electrode terminal for transmitting a current applied from the external power to the negative electrode.

As needed, a beading part 147 and a crimping part 148 may be included on the upper side of the battery case 142. The beading part 147 may be formed by press fitting the outer circumference of the battery case 142 up to a distance of D1. The beading part 147 may prevent the electrode assembly 141 accommodated inside the battery case 142 from escaping through the upper opening of the battery case 142, and may serve as a supporting part for the sealing body 143 to settle.

The crimping part 148 may be formed above the beading part 147, and has a shape extending and bent to surround the outer circumference of a cap plate 143a, disposed on the beading part 147, and a part of an upper surface of the cap plate 143a.

Next, the sealing body 143 seals the open end portion of the battery case 142, and includes the cap plate 143a, and a first gasket 143b providing air tightness and having insulation between the cap plate 143a and the battery case 142, and as needed, the sealing body may further include a connection plate 143c electrically and mechanically coupled to the cap plate 143a. The cap plate 143a may be compressed on the beading part 147 formed on the battery case 142, and may be fixed by the crimping part 148.

The cap plate 143a is a component made of a metal material having conductivity, and covers the upper opening of the battery case 142. The cap plate 143a is electrically connected to a positive electrode of the electrode assembly 141, and is electrically insulated from the battery case 142 through the first gasket 143b. Therefore, the cap plate 143a may function as a positive electrode terminal of the lithium secondary battery. The cap plate 143a may include a protruding part 143d which is formed by protruding upward from the center part C, and the protruding part 143d may be in contact with an external power such that a current is applied from the external power.

The first gasket 143b may be disposed between the cap plate 143a and the crimping part 148 for securing airtightness of the battery case 142, and between the battery case 142 and the cap plate 143a for electrical insulation.

Meanwhile, the lithium secondary battery 140 according to the present invention may further include current collector plates 144 and 145 as needed. The current collector plates are bonded to the non-coated part 146a of the positive electrode and the non-coated part 146b of the negative electrode, and are connected to the electrode terminals (that is, positive electrode terminal and negative electrode terminal), respectively.

In particular, the cylindrical battery 140 according to the present invention may include a first current collector plate 144 bonded to an upper part of the electrode assembly 141 and a second current collector plate 145 bonded to a lower part of the electrode assembly 141.

The first current collector plate 144 and/or the second current collector plate 145 may be included further.

The first current collector plate 144 is bonded to the upper part of the electrode assembly 141. The first current collector plate 144 is made of a conductive metal material such as aluminum, copper, and nickel, and is electrically connected to the non-coated part 146a of the positive electrode. A lead 149 may be connected to the first current collector plate 144. The lead 149 may extend upward from the electrode assembly 141 to be bonded to the connection plate 143c, or may be directly bonded to a lower surface of the cap plate 143a. The bonding of the lead 149 to other components may be made through welding. Preferably, the first current collector plate 144 may be integrally formed with the lead 149. In this case, the lead 149 may have a plate shape extending from the center of the first current collector plate 144 to the outer side.

Meanwhile, the first current collector plate 144 may be bonded to an end portion of the non-coated part 146a of the positive electrode, and the bonding may be made by a method of, for example, laser welding, resistance welding, ultrasonic welding, soldering, etc.

The second current collector plate 145 is bonded to the lower part of the electrode assembly 141. The second current collector plate 145 is made of a conductive metal material such as aluminum, copper, and nickel, and is electrically connected to the non-coated part 146b of the negative electrode. One side of the second current collector plate 145 may be bonded to the non-coated part 146b of the negative electrode, and the opposite side may be bonded to an inner-side bottom surface of the battery case 142. At this time, the bonding may be made in a method including laser welding, resistance welding, ultrasonic welding, soldering, etc.

Meanwhile, the lithium secondary battery 140 according to the present invention may further include an insulator 146 as needed. The insulator 146 may be disposed to cover an upper surface of the first current collector plate 144. Since the insulator 146 covers the first current collector plate 144, it may be possible to prevent the first current collector plate 144 and an inner circumference of the battery case 142 from being directly in contact with each other.

The insulator 146 includes a lead hole 151 through which the lead 149, extending upward from the first current collector plate 144, may be pulled out. The lead 149 is pulled out upward through the lead hole 151, and is bonded to the lower surface of the connection plate 143c or the lower surface of the cap plate 143a.

The insulator 146 may be made of an insulating polymer resin, for example, a polymer resin material such as polyethylene, polypropylene, polyimide, or polybutylene terephthalate.

Meanwhile, the lithium secondary battery 140 according to the present invention may further include a venting part 152 formed on the lower surface of the battery case 142, as needed. The venting part 152 corresponds to a region having a smaller thickness than a surrounding region in the lower surface of the battery case 142. Due to the small thickness, the venting part 152 is structurally vulnerable, compared to the surrounding region. Therefore, when the pressure inside the lithium secondary battery 140 rises above a certain level, the venting part 152 ruptures, and gas inside the battery case 152 is released to the outside, thereby preventing explosion of the battery.

FIG. 5 illustrates a cross-sectional view of a lithium secondary battery according to another embodiment of the present invention.

Referring to FIG. 5, a lithium secondary battery 170 according to another embodiment of the present invention has a structure of a battery case and a sealing body different from that of the lithium secondary battery 140 illustrated in FIG. 4, and the constitution of an electrode assembly and an electrolyte is substantially the same as that of FIG. 4.

In particular, the lithium secondary battery 170 according to another embodiment of the present invention includes a battery case 171 having a rivet terminal 172 installed through the battery case. The rivet terminal 172 is installed on a closed surface (upper surface in the drawing), which is partially closed, of one end portion of the battery case 171. The rivet terminal 172 is riveted through a through hole (first opening of first end portion) of the battery case 171 in a state where a second gasket 173 with insulating nature is disposed. The rivet terminal 172 is exposed to the outside toward the opposite direction of the gravity direction.

The rivet terminal 172 includes a terminal exposed part 172a and a terminal inserted part 172b. The terminal exposed part 172a is exposed to the outer side of the closed surface of the battery case 171. The terminal exposed part 172a may be positioned approximately on the center of the partially closed surface of the battery case 171. The maximum diameter of the terminal exposed part 172a may be formed larger than the maximum diameter of the through hole formed in the battery case 171. The terminal inserted part 172b may pass through approximately the center of the closed surface of the battery case 171, and thus may be electrically connected to a non-coated part 146a of a positive electrode. The terminal inserted part 172b may be rivet-coupled onto the inner-side surface of the battery case 171. That is, an end portion of the terminal inserted part 172b may have a shape curved toward the inner-side surface of the battery case 171. The maximum diameter of the end portion of the terminal inserted part 172b may be larger than the maximum diameter of the through hole of the battery case 171.

A lower end surface of the terminal inserted part 172b may be welded to a first current collector plate 144 connected to the non-coated part 146a of the positive electrode. An insulating cap 174 made of an insulating material may be disposed between the first current collector plate 144 and the inner-side surface of the battery case 171. The insulating cap 174 covers an upper part of the first current collector plate 144 and an upper border portion of an electrode assembly 141. Accordingly, it may be possible to prevent an outer-circumference non-coated part B3 of the electrode assembly 141 from being in contact with the inner-side surface of the battery case 171 having a different polarity to cause a short circuit. The terminal inserted part 172b of the rivet terminal 172 may pass through the insulating cap 174 to be welded to the first current collector plate 144.

The second gasket 173 is disposed between the battery case 171 and the rivet terminal 172 to prevent the battery case 171 and the rivet terminal 172 having the opposite polarities from each other from being electrically in contact. Accordingly, the upper surface of the battery case 171 having an approximately flat shape may function as a positive electrode terminal of the lithium secondary battery 170.

The second gasket 173 includes a gasket exposed part 173a and a gasket inserted part 173b. The gasket exposed part 173a is disposed between the terminal exposed part 172a of the rivet terminal 172 and the battery case 171. The gasket inserted part 173b is disposed between the terminal inserted part 172b of the rivet terminal 172 and the battery case 171. The gasket inserted part 173b may be deformed together during the riveting of the terminal inserted part 172b, and may thus be closely attached to the inner-side surface of the battery case 171. The second gasket 173 may be made of, for example, a polymer resin with insulating nature.

The gasket exposed part 173a of the second gasket 173 may have an extended shape to cover an outer circumference of the terminal exposed part 172a of the rivet terminal 172. In case the second gasket 173 covers the outer circumference of the rivet terminal 172, it may be possible to prevent a short circuit from occurring in a process of coupling an electrical connecting component, such as a busbar, to the upper surface of the battery case 171 and/or the rivet terminal 172. Although not illustrated in the drawing, the gasket exposed part 173a may have an extended shape to cover not only the outer circumference but also a part of the upper surface of the terminal exposed part 172a.

In the case where the second gasket 173 is made of a polymer resin, the second gasket 173 may be bonded to the battery case 171 and the rivet terminal 172 by heat fusion. In this case, airtightness in a bonded interface between the second gasket 173 and the rivet terminal 172, and in a bonded interface between the second gasket 173 and the battery case 171 may be strengthened. Meanwhile, in the case where the gasket exposed part 173a of the second gasket 173 has a shape extending to the upper surface of the terminal exposed part 172a, the rivet terminal 172 may be integrally coupled to the second gasket 173 through an insert injection.

A rest region 175 of the upper surface of the battery case 171, other than the region occupied by the rivet terminal 172 and the second gasket 173, corresponds to a negative electrode terminal having the opposite polarity of that of the rivet terminal 172.

A second current collector plate 176 is bonded to the lower part of the electrode assembly 141. The second current collector plate 176 is made of a conductive metal material such as aluminum, steel, copper, and nickel, and is electrically connected to a non-coated part 146b of a negative electrode.

Preferably, the second current collector plate 176 is electrically connected to the battery case 171. For this, at least a part of a border portion of the second current collector plate 176 may be disposed and fixed between the inner-side surface of the battery case 171 and a first gasket 178b. In an embodiment, the at least a part of the border portion of the second current collector plate 176 may be fixed to a beading part 180 by welding in a state of being supported by a lower-side surface of the beading part 180 formed on the lower side of the battery case 171. In a different embodiment, the at least a part of the border portion of the second current collector plate 176 may be directly welded onto an inner wall of the battery case 171.

The second current collector plate 176 may include a plurality of irregularities (not shown) formed in all directions on a surface opposed to the non-coated part 146b. In case of the irregularities being formed, the irregularities may be press-fitted to the non-coated part 146b by pressing the second current collector plate 176.

Preferably, the second current collector plate 176 and the end portion of the non-coated part 146b may be bonded by welding, for example, by laser welding.

A sealing body 178 that seals a lower open end of the battery case 171 includes a cap plate 178a and a first gasket 178b. The first gasket 178b electrically separates the cap plate 178a and the battery case 171. A crimping part 181 fixes a border of the cap plate 178a and the first gasket 178b together. The cap plate 178a includes a vent part 179. The configuration of the vent part 179 is substantially the same as that of the embodiment previously described.

Preferably, the cap plate 178a is made of a conductive metal material. However, since the first gasket 178b is disposed between the cap plate 178a and the battery case 171, the cap plate 178a does not have electrical polarity. The sealing body 178 seals the lower open end of the battery case 171, and when the internal pressure of a battery cell 170 rises above a critical value, the sealing body functions to release gas.

Preferably, the rivet terminal 172 electrically connected to the non-coated part 146a of the positive electrode is used as a positive electrode terminal. In addition, in the upper surface of the battery case 171 electrically connected to the non-coated part 146b of the negative electrode through the second current collector plate 176, a portion 175 other than the rivet terminal 172 is used as a negative electrode terminal. Accordingly, when two electrode terminals are positioned on the upper part of a lithium secondary battery, it is possible to dispose an electrical connection component, such as a busbar, only on one side of the lithium secondary battery 170. This may result in simplification of a battery pack structure and improvement of energy density. In addition, since the portion 175 used as the negative electrode terminal has an approximately flat shape, it may be possible to secure a sufficient bonding area when the electrical connection component, such as a busbar, is bonded. Accordingly, in the lithium secondary battery 170, the resistance may be decreased to a desirable level at a bonding portion of the electrical connection component.

In case of forming the lithium secondary battery in the structure as previously described, the lithium secondary battery may have less concentration of current, compared to a conventional battery including an electrode tab, so that heat inside the battery may be effectively reduced, and accordingly, effect on improving thermal safety of the battery may be achieved.

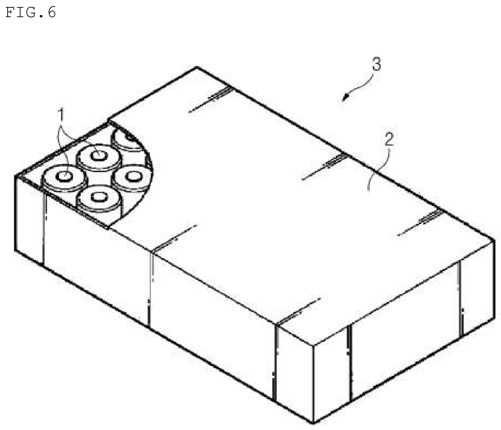

The lithium secondary battery according to the present invention, previously described, may be used as a unit cell for preparing a battery pack. FIG. 6 schematically illustrates the constitution of a battery pack according to an embodiment of the present invention. Referring to FIG. 6, the battery pack 3 according to an embodiment of the present invention includes an assembly in which lithium secondary batteries 1 are electrically connected, and a pack housing 2 accommodating the assembly. The lithium secondary battery 1 is the lithium secondary battery according to the embodiment previously described. In the drawing, the components, such as a busbar, a cooling unit, and an external terminal for electrical connection of the lithium secondary batteries 1 are omitted for the convenience of drawing illustration.

The battery pack 3 may be provided to a vehicle. The vehicle may be, for example, an electric vehicle, a hybrid vehicle, or a plug-in hybrid vehicle. The vehicle includes a four-wheeled vehicle or a two-wheeled vehicle.

Hereinafter, the present invention is described in more detail through particular examples.

**Preparation Example 1 - Positive Electrode A**

A positive electrode active material ($LiNi_{95.9}Co_{1.55}Mn_{2.55}O_2$), a positive electrode conductive material (CNT), and a positive electrode binder (PVdF) were mixed in N-methylpyrrolidone in a weight ratio of 97.55: 0.6: 1.85 to prepare a positive electrode slurry.

The positive electrode slurry was applied onto an aluminum current collector, dried and pressed, and slitting was performed to form a positive electrode composite layer of 4132 mm length a, and 80.5 mm width b.

**Preparation Example 2 - Positive Electrode B**

A positive electrode active material ($LiNi_{95.9}Co_{1.55}Mn_{2.55}O_2$), a positive electrode conductive material (CNT), and a positive electrode binder (PVdF) were mixed in N-methylpyrrolidone in a weight ratio of 97.55: 0.6: 1.85 to prepare a positive electrode slurry.

The positive electrode slurry was applied onto an aluminum current collector, dried and pressed, and slitting was performed to form a positive electrode composite layer of 3984 mm length a and 65 mm width b.

**Preparation Example 3 - Positive Electrode C**

A positive electrode active material ($LiNi_{0.971}Co_{0.008}Mn_{0.021}O_2$), a positive electrode conductive material (CNT), and a positive electrode binder (PVdF) were mixed in N-methylpyrrolidone in a weight ratio of 97.55: 0.6: 1.85 to prepare a positive electrode slurry.

The positive electrode slurry was applied onto an aluminum current collector, dried and pressed, and slitting was performed to form a positive electrode composite layer of 4520 mm length a and 64 mm width b.

8 each of the positive electrode A and the positive electrode B, respectively prepared according to Preparation Example 1 and Preparation Example 2, were stored at different storage conditions (humidity and period), as listed in [Table 1] below, and then the moisture content (w) (ppm) and the absolute moisture amount (g) of the positive electrode were measured in the following method. In addition, the positive electrode C, prepared according to Preparation Example 3 above, was stored in the storage condition listed in [Table 1] below, and then the moisture content (ppm) and the absolute moisture amount (g) of the positive electrode were measured. At this time, the moisture content refers to the weight of moisture contained per $10^6$ g of the positive electrode composite layer, and the absolute moisture amount refers to the weight of moisture contained in the entire positive electrode.

(1) Positive electrode moisture content (unit: ppm): the positive electrodes were each cut out into a sheet in a size of 30 mm x 40 mm, and four sheets were overlapped to prepare a sample, and the sample was put into a vial of 20 mL, and using a Metrohm 851 of Titando which is an electrode moisture measurement instrument, the amount of moisture included in the sample was measured. At this time, the measurement was performed in a dry room of 23+/-3 °C temperature, 1% or less humidity, and -35 °C or less dew point temperature, and the measured amount of moisture was divided by the total weight of the positive electrode composite layer of the sample, and the calculated value was evaluated as the moisture content.

(2) Absolute moisture amount (unit: mg): a weight of the positive electrode was measured, and the weight of the positive electrode and the moisture content of the positive electrode, measured as above, were substituted into the equation below to measure the absolute moisture amount.

Absolute moisture amount (mg) = moisture content (ppm) x weight of positive electrode (g) x $10^{-3}$

The measured moisture content (w) of the positive electrode and the value of a/b were substituted into Equation (1) to calculate an A value, and the calculation results were listed in [Table 1] below.

[Table 1]

| Sample# | Type of positive electrode | Relative humidity (%) | Period of storage (week) | Absolute moisture amount (mg) | Moisture content (ppm) | A |
|---|---|---|---|---|---|---|
| A-1 | | RH 1% | 2 | 15.2 | 99.3 | 0.3747912 |
| A-2 | | RH 1% | 4 | 15.5 | 101 | 0.3812076 |
| A-3 | | RH 1% | 8 | 14.1 | 92.2 | 0.3479935 |
| A-4 | Positive electrode A (a/b=51.3) | RH 1% | 10 | 15.6 | 101.8 | 0.3842271 |
| A-5 | | RH 1% | 16 | 16.8 | 109.8 | 0.4144217 |
| A-6 | | RH 1% | 17 | 17.1 | 111.5 | 0.4208381 |
| A-7 | | RH 15% | 18 | 46.3 | 302 | 1.1398484 |
| A-8 | | Exposed to outside air | 18 | 107.4 | 699.6 | 2.640523 |
| B-1 | | RH 1% | 2 | 11.8 | 99.3 | 0.3579273 |
| B-2 | | RH 1% | 4 | 12.0 | 101 | 0.3640549 |
| B-3 | | RH 1% | 8 | 11.0 | 92.2 | 0.3323353 |
| B-4 | Positive electrode B (a/b=63.1) | RH 1% | 10 | 12.1 | 101.8 | 0.3669385 |
| B-5 | | RH 1% | 16 | 13.1 | 109.8 | 0.3957746 |
| B-6 | | RH 1% | 17 | 13.3 | 111.5 | 0.4019022 |
| B-7 | | RH 15% | 18 | 36.0 | 302 | 1.0885603 |
| B-8 | | Exposed to outside air | 18 | 83.4 | 699.6 | 2.5217113 |
| C | Positive electrode C (a/b=70.6) | RH 10% | 17 | 41.5 | 310 | 1.0764088 |

**Example and Comparative Example**

<Preparation of Negative Electrode>

A graphite-based negative electrode active material, a conductive material (carbon black), a styrene-butadiene rubber (SBR), and carboxymethyl cellulose (CMC) were mixed in water in a weight ratio of 98.45: 0.05: 0.6: 0.9 to prepare a negative electrode slurry. The negative electrode slurry was applied to both sides of a copper current collector sheet, then dried at 150 °C, and then roll-pressed to prepare a negative electrode.

<Preparation of Lithium Secondary Battery>

As listed in [Table 2] below, a positive electrode was selected, and a separator was disposed between the selected positive electrode and the negative electrode prepared as above, and then wound to prepared an electrode assembly in a jelly-roll type. Thereafter, the jelly-roll-type electrode assembly was inserted into a cylindrical battery case of 46 mm diameter and 80 mm height, and an electrolyte solution was injected to prepare a 4680 cell.

**Experimental Example 1**

Each of the 4680 cells, prepared as above, was charged at 0.2 C in a constant current-constant voltage mode (0.005 C cut-off) to 4.25 V, and then discharged at 1 C in a constant current mode to measure an average discharge voltage, discharge capacity, and energy density, and the decrease rate of energy density in each cell was calculated on the basis of the energy density (100%) of the cell according to Example 1. The measurement results were listed in [Table 2] below.

[Table 2]

| | Type of positive electrode | Average voltage [V] | 1C Average discharge capacity [mAh/g] | Decrease rate of energy density [%] |
|---|---|---|---|---|
| Example 1 | A-1 | 3.8111 | 197.4 | 0 |
| Example 2 | A-2 | 3.8083 | 198.9 | 0.7 |
| Example 3 | A-3 | 3.8047 | 197.7 | 0 |
| Example 4 | A-4 | 3.8015 | 197.3 | 0.3 |
| Example 5 | A-5 | 3.8048 | 197.9 | 0.1 |
| Example 6 | A-6 | 3.7988 | 197.8 | 0.1 |
| Example 7 | B-1 | 3.8111 | 197.4 | 0 |
| Example 8 | B-2 | 3.8083 | 198.9 | 0.7 |
| Example 9 | B-3 | 3.8047 | 197.7 | 0 |
| Example 10 | B-4 | 3.8015 | 197.3 | 0.3 |
| Example 11 | B-5 | 3.8048 | 197.9 | 0.1 |
| Example 12 | B-6 | 3.7988 | 197.8 | 0.1 |
| Comparative Example 1 | A-7 | 3.7909 | 196.5 | 1.0 |
| Comparative Example 2 | A-8 | 3.7807 | 195.5 | 1.8 |
| Comparative Example 3 | B-7 | 3.7909 | 196.5 | 1.0 |
| Comparative Example 4 | B-8 | 3.7807 | 195.5 | 1.8 |
| Comparative Example 5 | C | 3.7897 | 196.5 | 1.2 |

Referring to [Table 2] above, it can be seen that the lithium secondary batteries, according to Examples 1 to 12, applied with the positive electrodes satisfying Equation (1) had less reduction in discharge voltage, and had lower decrease rate of energy density, which is less than 1%, than the lithium secondary batteries, according to Comparative Examples 1 to 4, applied with the positive electrodes not satisfying Equation (1).

**Experimental Example 2**

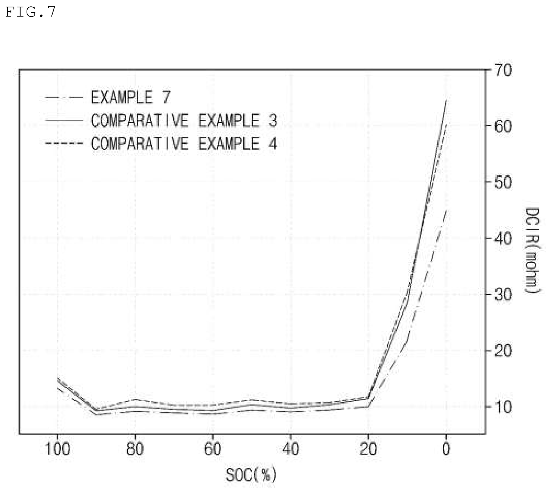

Resistance values at SOC 0 (end-of-discharge resistance) of the 4680 cells according to the examples and comparative examples were measured. The measurement results were listed in Table 3 below. In addition, the resistance values by SOC, according to Example 7 and Comparative Examples 3 and 4, were listed in FIG. 7.

Referring to Table 3 below and FIG. 7, it can be seen that the cells according to the examples, applied with the positive electrodes satisfying Equation (1), had more excellent end-of-discharge resistance characteristics than the cells according to the comparative examples applied with the positive electrodes not satisfying Equation (1).

[Table 3]

| | Type of positive electrode | End-of-discharge resistance [mΩ] |
|---|---|---|
| Example 1 | A-1 | 43.7 |
| Example 2 | A-2 | 43.6 |
| Example 3 | A-3 | 43.9 |
| Example 4 | A-4 | 44.0 |
| Example 5 | A-5 | 44.2 |
| Example 6 | A-6 | 44.1 |
| Example 7 | B-1 | 45 |
| Example 8 | B-2 | 45.7 |
| Example 9 | B-3 | 46.5 |

(continued)

|  | Type of positive electrode | End-of-discharge resistance [mΩ] |
|---|---|---|
| Example 10 | B-4 | 45.9 |
| Example 11 | B-5 | 46.2 |
| Example 12 | B-6 | 47.0 |
| Comparative Example 1 | A-7 | 60 |
| Comparative Example 2 | A-8 | 61.1 |
| Comparative Example 3 | B-7 | 63 |
| Comparative Example 4 | B-8 | 60 |
| Comparative Example 5 | C | 57.9 |

**Claims**

1. A positive electrode, comprising a positive electrode composite layer which includes a high-nickel positive electrode active material containing nickel in an amount of 80 mol% or greater in an entire metal excluding lithium,

   wherein A, defined by Equation (1) below, is 1 or less.

   $$\text{Equation (1): } A = 0.00076\ln(-2.435 \times (a/b) + 268.4) \times w$$

   where, in Equation (1) above, a is a length of the positive electrode composite layer measured in mm, b is a width of the positive electrode composite layer measured in mm, and w is a value of moisture content in the positive electrode measured in ppm.

2. The positive electrode of claim 1, wherein the high-nickel positive electrode active material comprises a lithium transition metal oxide represented by [Chemical Formula 1] below.

   [Chemical Formula 1]     $Li_aNi_xCo_yM^1_zM^2_wO_2$

   where, in Chemical Formula 1 above,
   $M^1$ is at least one of Mn and Al, $M^2$ includes one or more selected from the group consisting of Ti, Mg, Al, Zr, Y, Ba, Ca, Sr, W, Ta, Nb, and Mo, and $0.9 \le a \le 1.1$, $0.8 \le x < 1$, $0 < y < 0.2$, $0 < z < 0.2$, and $0 \le w \le 0.1$.

3. The positive electrode of claim 1, wherein a ratio a/b of the length a of the positive electrode composite layer to the width b of the positive electrode composite layer is 40 to 70.

4. The positive electrode of claim 1, wherein the length a of the positive electrode composite layer is 3000 mm to 5000 mm, and
   the width b of the positive electrode composite layer is 50 mm to 90 mm.

5. The positive electrode of claim 1, wherein Expression (2) below is satisfied.

   $$\text{Expression (2): } w \le 4(a/b) + 54$$

   where, in Expression (2) above, a is a length of the positive electrode composite layer measured in mm, b is a width of the positive electrode composite layer measured in mm, and w is a value of moisture content in the positive electrode measured in ppm.

6. A preparation method of a positive electrode, comprising:

   preparing a positive electrode which includes a positive electrode composite layer containing a high-nickel positive electrode active material having nickel in an amount of 80 mol% or greater in an entire metal excluding lithium; and

storing the positive electrode in an environment controlled such that A, defined by Equation (1) below, becomes 1 or less.

$$\text{Equation (1): } A = 0.00076\ln(-2.435 \times (a/b) + 268.4) \times w$$

wherein, in Equation (1) above, a is a length of the positive electrode composite layer measured in mm, b is a width of the positive electrode composite layer measured in mm, and w is a value of moisture content in the positive electrode measured in ppm.

7. The preparation method of claim 6, wherein, in the storing of the positive electrode, the positive electrode is stored in an environment with a relative humidity of 15% or less.

8. The preparation method of claim 6, wherein, in the storing of the positive electrode, a storage period of the positive electrode is 17 weeks or less.

9. A lithium secondary battery comprising:

an electrode assembly in which the positive electrode of claim 1, a separator, and a negative electrode are sequentially laminated and wound in one direction;
an electrolyte; and
a battery case in which the electrode assembly and the electrolyte are accommodated.

10. The lithium secondary battery of claim 9, wherein the battery case comprises:

a battery can in which the electrode assembly and the electrolyte are accommodated; and
a sealing body which seals an open end portion of the battery can.

11. The lithium secondary battery of claim 10, wherein the lithium secondary battery is a cylindrical battery.

12. The lithium secondary battery of claim 11, wherein a ratio of a battery diameter to a battery height of the cylindrical battery is 0.4 or greater.

13. The lithium secondary battery of claim 12, wherein the battery diameter is 40 mm or greater, and the battery height is 70 mm or greater.

14. The lithium secondary battery of claim 10, wherein the positive electrode and the negative electrode of the electrode assembly comprise a non-coated part, and
the non-coated part defines an electrode tab.

FIG.1

WINDING DIRECTION

11  10  12

Z

X

FIG.2

20  22  21

Z

Y

FIG.3

FIG.4

FIG.5

FIG.6

FIG.7

## INTERNATIONAL SEARCH REPORT

| International application No. |
| --- |
| **PCT/KR2024/020849** |

### A. CLASSIFICATION OF SUBJECT MATTER

**H01M 4/525**(2010.01)i; **H01M 4/505**(2010.01)i; **H01M 4/131**(2010.01)i; **H01M 4/1391**(2010.01)i; **H01M 10/052**(2010.01)i; **H01M 50/107**(2021.01)i; **H01M 50/152**(2021.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); H01M 10/05(2010.01); H01M 10/052(2010.01); H01M 4/13(2010.01); H01M 4/36(2006.01); H01M 4/48(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고니켈(high-nickel), 양극 활물질(cathode active material), 양극(cathode), 합재층 (composite layer), 수분율(moisture content), 상대습도(relative humidity), 원통형 전지(cylindrical battery), 리튬이차전지 (lithium secondary battery)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2007-0024353 A (MATSUSHITA ELECTRIC INDUSTRIAL CO., LTD.) 02 March 2007 (2007-03-02)<br>See claim 1; and paragraphs [0046]-[0051]. | 1-14 |
| A | JP 2019-149269 A (TOYOTA MOTOR CORP.) 05 September 2019 (2019-09-05)<br>See abstract; and claim 1. | 1-14 |
| A | KR 10-2016-0146580 A (LG CHEM, LTD.) 21 December 2016 (2016-12-21)<br>See claims 1 and 7-9; and paragraphs [0063]-[0067]. | 1-14 |
| A | KR 10-0750020 B1 (MATSUSHITA ELECTRIC INDUSTRIAL CO., LTD.) 16 August 2007 (2007-08-16)<br>See claims 1-5. | 1-14 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 March 2025** | **31 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/020849** |

### C. DOCUMENTS CONSIDERED TO BE RELEVANT

| Category* | Citation of document, with indication, where appropriate, of the relevant passages | Relevant to claim No. |
|---|---|---|
| A | KR 10-2015-0014132 A (LG CHEM, LTD.) 06 February 2015 (2015-02-06)<br>See claims 1-20. | 1-14 |

Form PCT/ISA/210 (second sheet) (July 2022)

## INTERNATIONAL SEARCH REPORT
### Information on patent family members

International application No.

**PCT/KR2024/020849**

| Patent document cited in search report | | | Publication date (day/month/year) | Patent family member(s) | | | Publication date (day/month/year) |
|---|---|---|---|---|---|---|---|
| KR | 10-2007-0024353 | A | 02 March 2007 | CN | 100456553 | C | 28 January 2009 |
| | | | | CN | 1925205 | A | 07 March 2007 |
| | | | | JP | 2007-059230 | A | 08 March 2007 |
| | | | | JP | 5002927 | B2 | 15 August 2012 |
| | | | | US | 2007-0048615 | A1 | 01 March 2007 |
| | | | | US | 7767348 | B2 | 03 August 2010 |
| JP | 2019-149269 | A | 05 September 2019 | JP | 6769451 | B2 | 14 October 2020 |
| KR | 10-2016-0146580 | A | 21 December 2016 | CN | 107580732 | A | 12 January 2018 |
| | | | | CN | 107580732 | B | 27 October 2020 |
| | | | | EP | 3309879 | A1 | 18 April 2018 |
| | | | | EP | 3309879 | A4 | 02 May 2018 |
| | | | | EP | 3309879 | B1 | 03 October 2018 |
| | | | | JP | 2018-523281 | A | 16 August 2018 |
| | | | | JP | 6732294 | B2 | 29 July 2020 |
| | | | | KR | 10-1937897 | B1 | 14 January 2019 |
| | | | | US | 10476081 | B2 | 12 November 2019 |
| | | | | US | 2018-0159131 | A1 | 07 June 2018 |
| | | | | WO | 2016-200223 | A1 | 15 December 2016 |
| KR | 10-0750020 | B1 | 16 August 2007 | CN | 100440588 | C | 03 December 2008 |
| | | | | CN | 1864288 | A | 15 November 2006 |
| | | | | JP | 4739958 | B2 | 03 August 2011 |
| | | | | KR | 10-2006-0060712 | A | 05 June 2006 |
| | | | | US | 2007-0122715 | A1 | 31 May 2007 |
| | | | | US | 7745042 | B2 | 29 June 2010 |
| | | | | WO | 2005-067080 | A1 | 21 July 2005 |
| KR | 10-2015-0014132 | A | 06 February 2015 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230190457